# EUROPEAN PATENT SPECIFICATION

(11) **EP 0 914 774 B1**
(45) Date of publication and mention of the grant of the patent: **03.07.2002**
(21) Application number: 98203783.0
(22) Date of filing: 09.11.1998
(51) Int. Cl.: A23G 1/20, A23G 1/21

(54) **Apparatus for the production of shells of fat-containing chocolate-like masses**
Vorrichtung zur Herstellung von Schalen aus fetthaltigen, Schokolade-ähnlichen Massen
Appareil pour la fabrication de coques en masses contenant des matières grasses, du type chocolat.

(43) Date of publication of application: 12.05.1999
(73) Proprietor: AASTED-MIKROVERK APS, 3520 Farum (DK)
(72) Inventor: Aasted, Lars, 2920 Charlottenlund (DK)
(74) Representative: Heiden, Finn

(56) References cited:
- EP-A- 0 589 820
- EP-A- 0 715 813
- EP-A- 0 775 447
- WO-A-95/32633
- WO-A-97/49296
- DE-C- 19 720 844
- US-A- 4 426 402

## Description

The present invention concerns an apparatus for the production of fat-containing, chocolate-like masses, in particular for chocolate articles, by which an amount of liquid mass is deposited into a mould cavity, whereafter an associated core member is immersed into the mass, the temperature of which core member is being controlled.

Methods and Systems of the above mentioned types, as well as associated apparatuses and parts for such systems are to-day well-known within the prior art, and are being used extensively by the chocolate making industry.

EP 0 589 820 A1 (AASTED-MIKROVERK APS) describes the first commercially available system and associated apparatus of the introductory type for industrial use. It relates to a method, where the chocolate-like mass under crystallisation solidifies from the mould cavity and inwardly to form the outer shape of the shell, the temperature of the mould cavity being lower than the temperature of the tempered mass, that a cooling member having a temperature lower than 0 ° C is immersed into the mass and kept in the mass in a fully immersed position for a predetermined period of time. The core or cooling member is furthermore immersed immediately into the mass after this has been filled into the mould cavity. The associated apparatus furthermore comprises means of controlling the up- and down movement of the cooling members, as well as controlling residence times in the fully immersed position. However, by this teaching within the technical field of the present invention the temperature control of the cooling member is performed by having channels extending through the cooling member.

Generally within the present field, chocolate-like masses are suspensions of non-fat particles, such as sugar, milk powders and cocoa solids in a liquid fat phase. The fat phase in most cases comprises an extent of the genuine cocoa butter of until around 30 %, but may comprise substitutes as well. Such substitutes may be in the form of other types of fat-containing oils. Chocolate-like masses where the cocoa butter has been replaced wholely or partly by other fats, are often named commercially as compound chocolate, in which the cocoa butter has been replaced by palm-kernel oil, are corresponding oils.

In the subsequent treatment of the ready-finished shell, the shell is frequently provided with a center mass of a creamy or liquid food material, which differs from that of the shell. Thereafter the shell is closed either with other shell parts along the periphery of the shell or by means of a coating.

Furthermore it is possible to join a produced shell with other types of shells immediately after being moulded, so that the finished food article being present as a hollow body e.g. in the form of eggs or figures, such as pixies and the like.

Furthermore it should be mentioned, that manufactured shells do not have to consist of just one layer of material but may e.g. consist of several layers of chocolate-like material. For example one shell made of dark chocolate may be provided with an interior coating of white chocolate (or vice versa) by the same method and system even before the shell moulded first leaves the mould cavity.

The chocolate-like masses are deposited into the mould cavity in a tempered liquid state. For several decades the technique of providing tempered chocolate-like masses has been well-known to the persons skilled within the art of chocolate-making. Chocolate-like mass being heated to 40-50 °C enters the process of tempering in which the mass in cooled down to around 27-32 °C, whereby crystallisation is initiated. Thereafter, the chocolate-like mass is re-heated, normally not more than 2 °C providing the ready-tempered chocolate-like mass with a content of stable β crystals in an amount lesser than 5 %. Thereby lower melting crystals are remelted, so that only stable crystals remain in the ready-tempered mass. Such a process is for example performed by the AMK-tempering machines provided by Aasted-Mikroverk ApS, Denmark.

The quality of the ready-moulded chocolate shells has always been determined firstly by the state of the tempered chocolate mass. The skilled person knew that good flavour and mouth feeling chocolate, high gloss, high resistance to fat bloom as well as enhanced resistance to warm or heat was the consequence of the optimum tempering state, in which the liquid chocolate comprises only stable β crystals, especially small crystals before being deposited into the mould. However, before the invention of EP 0 589 820 B1 (AASTED-MIKROVERK APS), the skilled person thought that the setting of the deposited chocolate in the mould should be gentle and time consuming to an extent of often ½ - 1 hour before the moulded shell could be released from the mould cavity. By the invention of EP 0 589 820 B1 this prejudice was turned upside down, thereby discovering a method by which the deposited tempered chocolate was set rapidly e.g. typically within 10 seconds providing tremendous fast production rates for chocolate making industry.

GB 207974 (BOYD) discloses a further, and very early teaching from the beginning of the twentieth century of a proposal for the manufacturing of single shells of chocolate and by which a plunger core is cooled or warmed by making it hollow and filling it with, or circulating through it, a cooling or warming liquid.

Such plungers or core members comprising channels for the flow of temperature regulating medium are time consuming and expensive to manufacture. This certainly applies for core members having a cross section with a small width as well as for core members having a comparatively larger width.

For the smaller core members having a width lesser than around typically 100 mm, the diameter of the channels machined are restricted and cumbersome to manufacture, as well as the obtained heat transmission effect of the circulating medium is lesser than impressive. For the larger core members, the required heat transmission effect is even higher and consequently more material has to be machined away by a cumbersome procedure for obtaining a larger width as well as length of the channels.

By the invention in question, the inventive idea comprise, that the top part of the core member is arranged in a channel in which temperature controlling medium flows, so that the core member itself is essentially free from channels for the circulation of medium.

Hereby cumbersome, time consuming and expensive manufacturing of channels in the core members are avoided.

The temperature of the core members are simply controlled by having the medium flowing around the top part of the core member.

The invention will be explained more fully below with reference to particularly preferred embodiments as well as the drawing, in which
- fig. 1: is a schematical view of the steps performed for reaching a packed shell product,
- fig. 2: is a schematical view of a turning point of an endless carrier for the mould elements, carried through the steps of fig. 1,
- fig. 3: is a sectional view along A-A of the mould element of fig. 2,
- fig. 4: is a lateral schematical cross-sectional view through a core member and an underlying mould cavity in which liquid chocolate-mass is deposited.
- fig. 5: is schematical view of the same in a closed position with the core member fully immersed in the mass,
- fig. 6: is a lateral, schematical, cross-sectional view through an apparatus part carrying several core members, as well as an associated underlying mould element such as of the type depicted in fig. 3, by which the cavities are now filled with liquid mass.

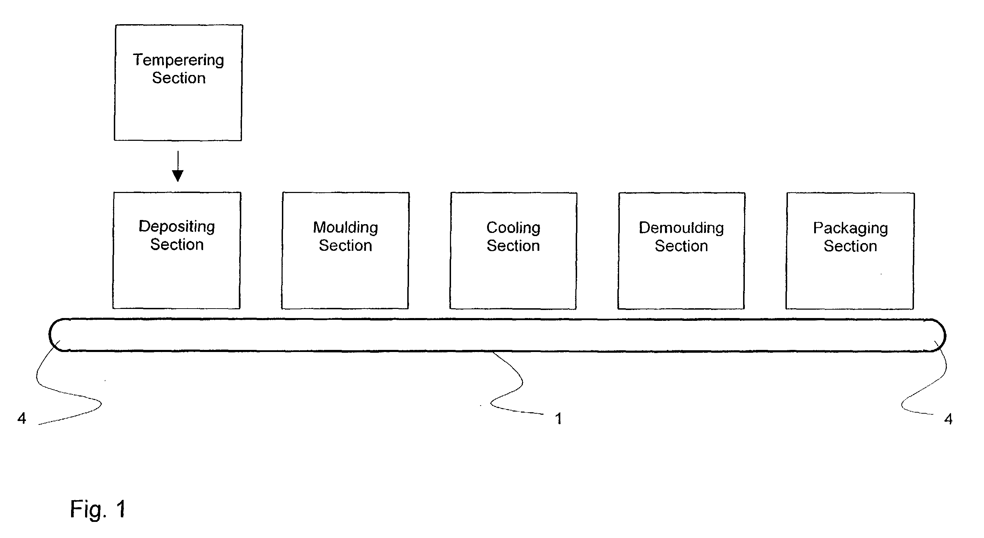

Steps to be performed for reaching a finished and even packed shell product is schematically disclosed in fig. 1.

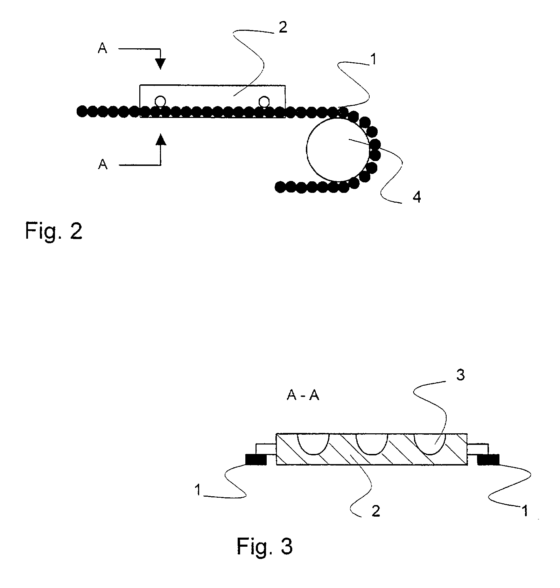

Between two turning points 4 an endless carrier belt 1 normally carries mould elements 2 through the depositing section, the moulding section, the cooling section, the demoulding section and finally to the packaging section. Thereafter, the endless carrier belt 1 returns the mould elements 2 to the depositing section. The moulding elements 2 may comprise one or even several mould cavities 3, as depicted in fig. 2 and 3.

Furthermore, it should be mentioned, that the fig. 1-3 disclose, that mould elements are moved continuously through the specific sections, such as the moulding section. In the moulding section, the moulding elements may be kept stationary when the associated core members are immersed, or the core members may be moved synchronously with the mould elements within the moulding section. Means for achieving such movements are well known to the skilled person within the art of chocolate making.

As described in EP 0 589 820 B1 (AASTED-MIKROVER APS) such systems comprise means for controlling the up and down movement of the core members as well as means for controlling the residence times of the core members in the fully immersed position, by the present invention especially to a predetermined time period. Furthermore, by the present invention, the residence times are typically lower than 60 seconds, though the invention is not restricted to such limitation. The residence times are more preferably lower than 20 seconds and are found to be especially expedient when between 0,1 and 5 seconds.

In the tempering section the fat-containing, chocolate-like mass is normally tempered to a temperature of around 27-34 °C having a content of stable β crystals. However, the actual temperatures as well as contents of stable β crystals depend on the choice of the skilled person for the chocolate-like mass in question. The tempered chocolate-like mass is delivered to the depositing section, in which the liquid mass is deposited into the mould cavity 3. In the moulding section to follow, a core member is immersed into the mass and the shell is actually moulded. Thereafter, a cooling section may follow, as well as a section for demoulding or parting the shell from the mould, and finally a packaging section, in which the shells are packed for delivery. The present invention is subject of the moulding section.

It should be mentioned, that in the remaining drawings of this description, it is disclosed that the tempered mass 5 already has been deposited into the mould cavities 3, 3', 3".

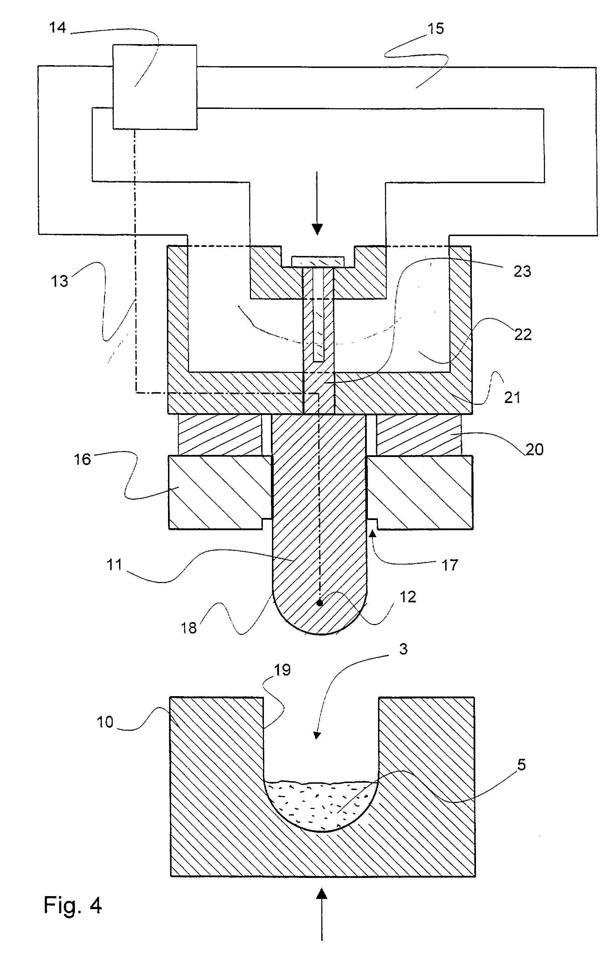

The first embodiment according to the invention is disclosed in fig. 4. The system comprises at least one mould cavity 3 to receive the mass 5, as well as at least one associated core member 11 to be immersed into the mass 5. For clarity only one set of a mould cavity and a core member is disclosed, but it should be mentioned, that the inventive idea may apply for several sets of mould cavities and core members as well.

Means is arranged to control the temperature of the core member 11. This means could comprise well known temperature regulation devices such as a temperature measuring sensor 12 connected via a wire 13 to a control unit 14, which controls the regulation flow of a temperature controlling medium, which circulates via channels 15, 22 through the holding plate 21 of the core member 11.

However, these temperature regulation devices may be laid out in many different ways, such as comprising refrigeration or electrical heating, as long as they to the skilled person achieves an essentially constant temperature of the core member 11.

Important is, that by the present invention, a top part 23 of the core member 11 is arranged in a channel 22 in which temperature controlling medium flows, so that the core member itself is essentially free from channels for the circulation of medium.

The top part is an upper part of the core member itself, however, it may be provided as a separate part 23 connecting the remaining part of the core member with the holding device 21, as disclosed in fig. 4. Many embodiments of the top part may apply within the inventive idea, important is however, that the top part is free of channels with the purpose of controlling the temperature of the core member as is the core member itself essentially free of such channels as well. Decisive is, that the top part is able to conduct heat or cool the remaining parts of the core member by the flow of temperature controlling medium around the top part.

Advantageously, the channel 22 for the temperature controlling medium is arranged in a holding device 21 for the core member 11. The holding device 21 controls the axial movement of the core member 11. The channel 22 extends by the disclosed embodiment horizontally through the holding device 21.

The temperature of the core member could be controlled to be equal to or lower than 0 ° C, but could even be controlled to be higher than 0 ° C. An especially good quality of the shells as well as fast and efficient production has been achieved, when the temperature of the core member 11 is controlled to be lower than around 10 ° C. Especially excellent results have been obtained, when the temperature of the core member is being controlled to be lower than -5 ° C.

Even the temperature of the mould cavity 10 may be controlled, especially to between 10 °C and 30 °C. Thereby it has astonishingly been discovered, that a smooth outer surface of the shells is obtained without having any shrinks or depressions, such as the so called "Saturn" rings.

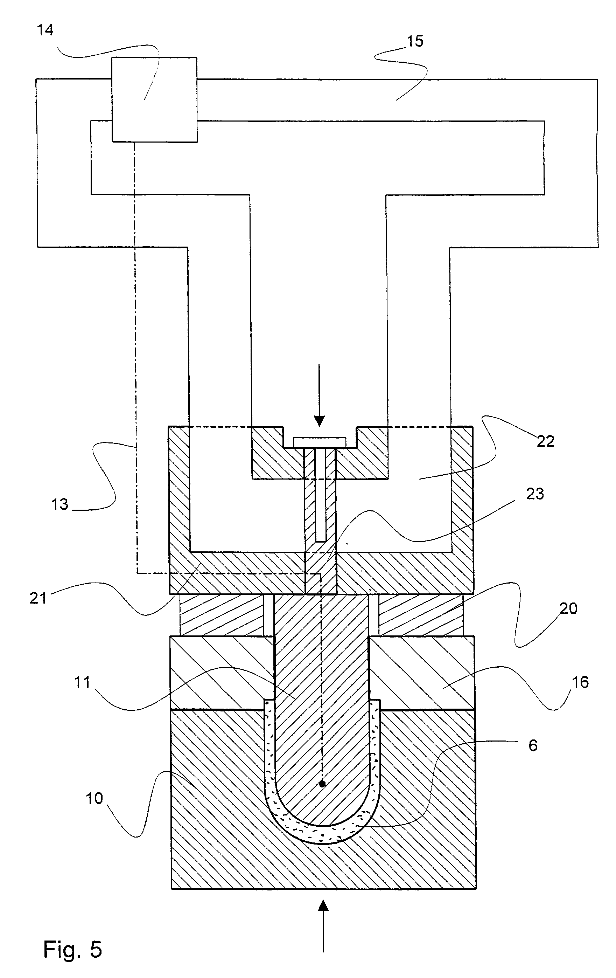

The system may furthermore comprise mould cavity closure means, which could be in the form of a ring 16 as depicted in fig. 4. The ring 16 extends peripherally around the core member 11 and comprises shell rim moulding surfaces 17, which together with outer surfaces 18 of the core 11 and inner surfaces 19 of the mould cavity 3, determines the full geometry of the ready moulded shell 6 as depicted in fig. 5.

The cavity closure ring 16 is axially movable in relation to the core member 11. Important for the disclosed embodiment is, that the cavity closure ring 16 could be moved until secure closure with the mould cavity 3 when the core member 11 is moved into the mass and pressure is build-up in the mass 5. In this regard, the ring 16 may be suspended from the upper part of the core member 11 by means of one or several springs 20, or another type of compressible means.

However the inventive idea may apply as well when a method is performed, by which the closure ring 16 is omitted, such that the mass is free to flow up at the upper surface of the mould cavity.

Having controlled the temperature of the core member 11 to the predetermined value, such as for example -5 °C, the core member 11 is moved downwards into the mass 5. During that movement, the mould cavity closure ring 16 engages the upper surface 24 of the mould element 10. As the ring 16 is suspended to the top part 15 of the core member 11 by a spring means 20, further downwards movement of the core 11 creates a biasing force in that spring means 20, pressing the ring 16 to a safe closure of the mould cavity 3 when the core moves further downwards.

By even further movement of the core member 11 downwards into the mass to achieve a complete filling of the enclosed mould cavity 3 with liquid mass, thereby instantaneously building up pressure in the mass. Advantageously the travelling of the core member 11 may be halted when the pressureload has reached a predetermined value, which may be controlled and read out at known control means, which is not disclosed. The fully immersed position is disclosed in fig. 5.

For the particular mould cavity 3 in question, the height of the moulded shells 6 will always be exactly the same due to the secure enclosure of the mould cavity 3 by the closure ring 16, which determines the upper position of the shell rim exactly.

By the embodiment disclosed in fig. 4 and 5 is obtained, that the biasing spring means 20 forces the ring 16 against the upper surface 24 of the mould element 10, when the core member is lifted up again from the moulded shell article. Thereby the delicate rim part of the shell 6 is still safely enclosed and properly supported when the adhesion forces are released by lifting the core 11 up and free of the shell.

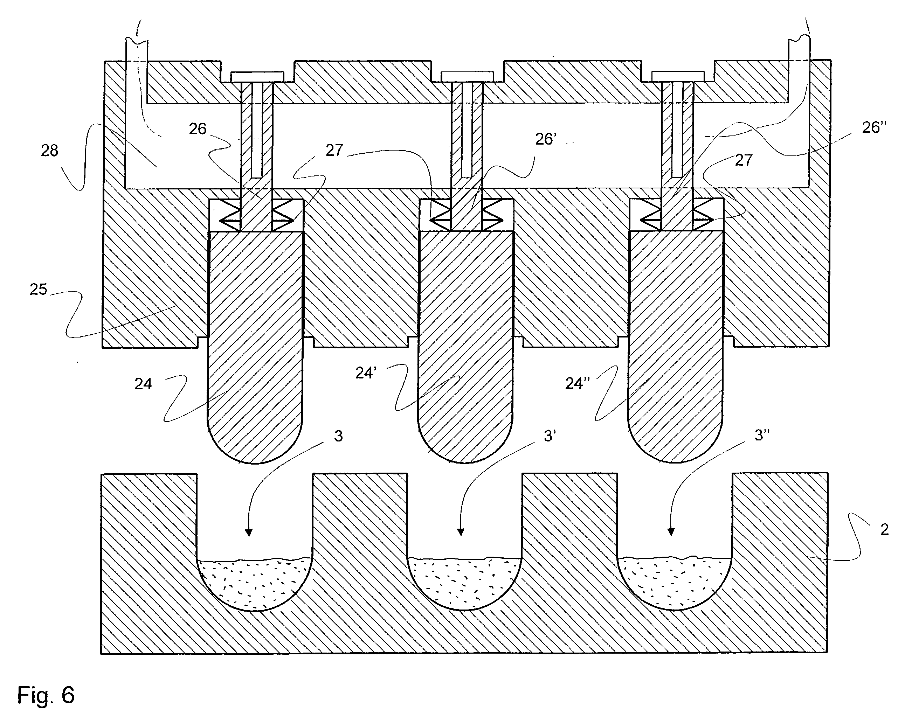

Another embodiment of the invention is schematically disclosed in fig. 6. By this embodiment, the core members 24, 24' and 24" are axially movably suspended from a holding device 25, which controls the axial movements of the cores 24, 24' and 24". By the disclosed embodiment the closure means may constitute part of the holding device 25. The core members 24, 24' and 24" are guided axially in relation to the holding device 25 by means of a known type of slide guidance which comprise the top part 26 of the core members.

The suspension may typically comprise compressible spring means 27 of any kind for providing independent loadings of the core members.

The top parts 26, 26' and 26" of the core members 24, 24' and 24" are arranged in a horizontal channel 28 adapted for the through flow of temperature controlling medium. The medium may be controlled as previously explained. Especially for apparatus parts comprising more than one core member, the inventive idea has proven to be advantageous. Essentially as the necessity of flow channels in the core members no longer apply. Great savings in manufacturing time and expenditure as well as simplicity is therefore achieved for an apparatus having a multiple of core members.

The core members as well as the top parts thereof may be manufactured of a material with a high heat transmission capability. Such materials are typically aluminium, copper, etc.

Though the top parts are depicted in fig. 6 having a width, that are somewhat smaller than that of the remaining parts of the core members, this are in no way a restriction of the inventive idea. The width of the top parts may have essentially any size in comparison to that of the remaining parts of the core members, it may even be larger. Important is, that the top parts are able to conduct the necessary heat or cooling to the remaining parts of the core members for an essentially constant temperature to be maintained of those.

By the embodiment of fig. 6 an especially fast and productive system for shell making is available, yet providing an unforeseen high quality of the complete batch of shells produced.

## Claims

1. Apparatus of a system for the production of shells of fat-containing, chocolate-like masses, in particular for chocolate articles,
which apparatus comprise at least one core member (11; 24, 24', 24") adapted to be immersed into the mass in an associated mould cavity (3; 3', 3"),
wherein the top part (23; 26, 26', 26") of the core member is arranged in a channel (22; 28) in a holding device (21; 25), and that the channel is adapted for the flow of temperature controlling medium, so that the core member itself is free from channels for the circulation of medium.

2. Apparatus according to claim 1 wherein the top part (23; 26, 26', 26") extends through the channel (22; 28).

3. Apparatus according to claim 1 wherein the top part (23; 26, 26', 26") extends essentially vertically through the channel (22; 28).

4. Apparatus according to claim 1 wherein the top part (23; 26, 26', 26") has a width, which is smaller than that of the core member (11; 24, 24', 24").

5. Apparatus according to claim 1 wherein the channel (22; 28) extends essentially horizontally through the holding device (21; 25).

6. Apparatus according to claim 1 wherein the top part (23; 26, 26', 26") provides the connection of the core member (11; 24, 24', 24") with the holding device (21; 25).

7. Apparatus according to claim 1 wherein the cross section of the channel (22; 28) is circular.

8. Apparatus according to claim 1 wherein the cross section of the top part (23; 26, 26', 26") is circular.

9. Apparatus according to claim 1, wherein a temperature measuring sensor (12) is arranged in the core member (11; 24, 24', 24").

10. Apparatus according to claim 1, wherein the temperature of the core member (11; 24, 24', 24") is being controlled to be equal to or lower than 0 °C.

11. Apparatus according to claim 1, wherein the temperature of the core member (11; 24, 24', 24") is being controlled to be higher than 0 °C.

12. Apparatus according to claim 1, wherein the core member (11; 24, 24', 24") is kept in the fully immersed position for a predetermined period of time, whereafter the core member is lifted out of the mass (5).

13. Apparatus according to claim 1, wherein the predetermined period of time is lower than 60 seconds.

14. Apparatus according to claim 1, further comprising mould cavity closure means (16) extending peripherally around the core member (11; 24, 24', 24") and comprising shell rim moulding surfaces (17), which together with outer surfaces (18) of the core and inner surfaces (19) of the mould cavity determines the full geometry of the ready moulded shell (6).

15. Apparatus according to claim 1, whereby the cavity closure means (16; 25) further being axially movable in relation to the core member (11; 24, 24', 24").

16. Apparatus according to claim 1, whereby the load means (27) are adapted to press the core member (11; 24, 24', 24") in direction against the mould cavity to achieve pressure build up in the mass (5).

17. Apparatus according to claim 1, by which the core member (11; 24, 24', 24") is axially movably suspended to the holding device (25).

18. Apparatus according to claim 1, by which the mould cavity closure means (16; 25) is adapted to be forced against the upper surface of the mould element (2; 10) comprising the mould cavity (3; 3', 3") in the closing position.

19. Apparatus according to claim 1, by which the closure means (16) is arranged axially movable in relation to the holding device (21).

20. Apparatus according to claim 1, by which spring means (20) is arranged between the closure means (16) and the holding device (21).

21. Apparatus according to claim 1, by which the closure means constitutes part of the holding device (25).

22. Apparatus according to claim 1, comprising more than one core member (11; 24, 24', 24"), by which the core members are independently suspended from the holding device (25).

## Patentansprüche

1. Vorrichtung eines Systems zur Herstellung von Schalen aus fetthaltiger, schokoladeartiger Masse, insbesondere für Artikel aus Schokolade,
welche Vorrichtung mindestens ein Kernelement (11; 24, 24', 24") zum Eintauchen in die Masse in einen zugehörigen Formenhohlraum (3; 3', 3") umfasst,
worin der Oberteil (23; 26, 26', 26") des Kernelements in einem Kanal (22; 28) in einer Haltevorrichtung (21; 25) angeordnet ist, und der Kanal zum Fluss eines Mediums zur Temperaturregulierung ausgebildet ist, so dass das Kemelement selbst frei von Kanälen für die Zirkulation von Medium ist.

2. Vorrichtung gemäss Anspruch 1, worin sich der Oberteil (23; 26, 26', 26") durch den Kanal (22; 28) erstreckt.

3. Vorrichtung gemäss Anspruch 1, worin sich der Oberteil (23; 26, 26', 26") im wesentlichen vertikal durch den Kanal (22; 28) erstreckt.

4. Vorrichtung gemäss Anspruch 1, worin der Oberteil (23; 26, 26', 26") eine Breite hat, welche schmaler ist als die des Kemelements (11; 24, 24', 24").

5. Vorrichtung gemäss Anspruch 1, worin sich der Kanal (22; 28) im wesentlichen horizontal durch die Haltevorrichtung (21; 25) erstreckt.

6. Vorrichtung gemäss Anspruch 1, worin der Oberteil (23; 26, 26', 26") die Verbindung des Kernelements (11; 24, 24', 24") mit der Haltevorrichtung (21; 25) bereitstellt.

7. Vorrichtung gemäss Anspruch 1, worin der Querschnitt des Kanals (22; 28) kreisförmig ist.

8. Vorrichtung gemäss Anspruch 1, worin der Querschnitt des Oberteils (23; 26, 26', 26") kreisförmig ist.

9. Vorrichtung gemäss Anspruch 1, worin ein Sensor zur Temperaturmessung (12) in dem Kernelement (11; 24, 24', 24") angeordnet ist.

10. Vorrichtung gemäss Anspruch 1, worin die Temperatur des Kernelements (11; 24, 24', 24") so geregelt wird, dass sie gleich oder weniger als 0°C ist.

11. Vorrichtung gemäss Anspruch 1, worin die Temperatur des Kernelements (11; 24, 24', 24") so geregelt wird, dass sie mehr als 0°C beträgt.

12. Vorrichtung gemäss Anspruch 1, worin das Kernelement (11; 24, 24', 24") die vollkommen eingetauchte Position für eine vorgegebene Zeit beibehält, wonach der Stempel aus der Masse (5) herausgehoben wird.

13. Vorrichtung gemäss Anspruch 1, worin die vorgegebene Zeit kleiner als 60 Sekunden ist.

14. Vorrichtung gemäss Anspruch 1, weiterhin mit einer Verschlussvorrichtung für den Formenhohlraum (16), die sich aussen um das Kernelement (11; 24, 24', 24") herum erstreckt und mit Schalenrand-Formflächen (17), welche zusammen mit den äusseren Oberflächen (18) des Kernelements und den inneren Oberflächen (19) des Formenhohlraumes die kompletten Abmessungen der fertig geformten Schale (6) festlegen.

15. Vorrichtung gemäss Anspruch 1, worin die Verschlussvorrichtung für den Formenhohlraum (16; 25) weiterhin in Bezug auf das Kernelement (11; 24, 24', 24") axial beweglich ist.

16. Vorrichtung gemäss Anspruch 1, worin die Lastvorrichtung (27) das Kernelement (11; 24, 24', 24") in Richtung gegen den Formenhohlraum presst, um einen Druckaufbau in der Masse (5) zu erzeugen.

17. Vorrichtung gemäss Anspruch 1, in welcher das Kernelement (11; 24, 24', 24") axial beweglich an der Haltevorrichtung (25) aufgehängt ist.

18. Vorrichtung gemäss Anspruch 1, in welcher die Verschlussvorrichtung für den Formenhohlraum (16; 25) so ausgebildet ist, dass sie in der geschlossenen Position gegen die obere Oberfläche des den Formenhohlraum (3; 3', 3") aufweisenden Formenelements (2; 10) gedrückt wird.

19. Vorrichtung gemäss Anspruch 1, in welcher die Verschlussvorrichtung (16) in Bezug auf die Haltevorrichtung (21) axial beweglich angeordnet ist.

20. Vorrichtung gemäss Anspruch 1, in welcher eine Federvorrichtung (20) zwischen der Verschlussvorrichtung (16) und der Haltevorrichtung (21) angebracht ist.

21. Vorrichtung gemäss Anspruch 1, in welcher die Verschlussvorrichtung einen Teil der Haltevorrichtung (25) darstellt.

22. Vorrichtung gemäss Anspruch 1, mit mehr als einem Kernelement (11; 24, 24', 24"), wobei die Kernelemente unabhängig von der Haltevorrichtung (25) aufgehängt ist.

## Revendications

1. Dispositif d'un système pour la production de coquilles en masses contenant des matières grasses, de type chocolat, en particulier pour des articles en chocolat,
**caractérisé en ce que** le dispositif comprend au moins un élément noyau (11; 24, 24', 24") adapté pour être immergé dans la masse dans une cavité de moule associée (3; 3', 3"),
dans lequel la partie supérieure (23; 26, 26', 26") de l'élément noyau est arrangée dans un canal (22; 28) dans un dispositif de fixation (21; 25), et le canal est adapté pour le flux d'un agent de contrôle de la température, de sorte que l'élément noyau même est exempt de canaux pour la circulation d'agent.

2. Dispositif selon la revendication 1, dans lequel la partie supérieure (23; 26, 26', 26") s'étend à travers le canal (22; 28).

3. Dispositif selon la revendication 1, dans lequel la partie supérieure (23; 26, 26', 26") s'étend essentiellement verticalement à travers le canal (22; 28).

4. Dispositif selon la revendication 1, dans lequel la partie supérieure (23; 26, 26', 26") a une largeur qui est plus étroite que celle de l'élément noyau (11; 24, 24', 24").

5. Dispositif selon la revendication 1, dans lequel le canal (22; 28) s'étend essentiellement horizontalement à travers le dispositif de fixation (21; 25).

6. Dispositif selon la revendication 1, dans lequel la partie supérieure (23; 26, 26', 26") pourvoit la connexion de l'élément noyau (11; 24, 24', 24") avec le dispositif de fixation (21; 25).

7. Dispositif selon la revendication 1, dans lequel la coupe transversale du canal (22; 28) est circulaire.

8. Dispositif selon la revendication 1, dans lequel la coupe transversale de la partie supérieure (23; 26, 26', 26") est circulaire.

9. Dispositif selon la revendication 1, dans lequel une sonde de mesure de la température (12) est arrangée dans l'élément noyau (11; 24, 24', 24").

10. Dispositif selon la revendication 1, dans lequel la température de l'élément noyau (11; 24, 24', 24") est contrôlée à être égale ou inférieure à 0°C.

11. Dispositif selon la revendication 1, dans lequel la température de l'élément noyau (11; 24, 24', 24") est contrôlée à être supérieure à 0°C.

12. Dispositif selon la revendication 1, dans lequel l'élément noyau (11; 24, 24', 24") est tenu dans la position totalement immergée dans une période de temps fixée d'avance, après quoi l'élément noyau est sorti de la masse (5).

13. Dispositif selon la revendication 1, dans lequel la période de temps fixée d'avance est moins que 60 secondes.

14. Dispositif selon la revendication 1, comprenant en outre le moyen de fermeture des cavités de moule (16) s'étendant périphériquement autour de l'élément noyau (11; 24, 24', 24") et comprenant des surfaces de moulage du bord des coquilles (17) qui conjointement avec les surfaces extérieures (18) du noyau et les surfaces intérieures (19) de la cavité de moule déterminent la géométrie totale de la coquille moulée (6) prête à l'emploi.

15. Dispositif selon la revendication 1, dans lequel le moyen de fermeture des cavités de moule (16; 25) est en outre axialement déplaçable par rapport à l'élément noyau (11; 24, 24', 24").

16. Dispositif selon la revendication 1, dans lequel le dispositif de moyens de charge (27) est adapté pour presser l'élément noyau (11; 24, 24', 24") en direction de la cavité de moule pour obtenir la formation de pression dans la masse (5).

17. Dispositif selon la revendication 1, dans lequel l'élément noyau (11; 24, 24', 24") est suspendu axialement déplaçable au dispositif de fixation (25).

18. Dispositif selon la revendication 1, dans lequel le moyen de fermeture des cavités de moule (16; 25) est adapté pour être forcé contre la surface supérieure de l'élément de moule (2; 10) comprenant la cavité de moule (3; 3', 3") dans la position de fermeture.

19. Dispositif selon la revendication 1, dans lequel le moyen de fermeture (16) est arrangé axialement déplaçable par rapport au dispositif de fixation (21).

20. Dispositif selon la revendication 1, dans lequel des moyens de ressort (20) sont arrangés entre le moyen de fermeture (16) et le dispositif de fixation (21).

21. Dispositif selon la revendication 1, dans lequel le moyen de fermeture fait partie du dispositif de fixation (25).

22. Dispositif selon la revendication 1, comprenant plus d'un élément noyau (11; 24, 24', 24") dans lequel les éléments noyaux sont suspendus de manière indépendante du dispositif de fixation (25).
